# EUROPÄISCHE PATENTSCHRIFT

(11) **EP 1 658 750 B1**
(45) Veröffentlichungstag und Bekanntmachung des Hinweises auf die Patenterteilung: **27.02.2008**
(21) Anmeldenummer: 04766459.4
(22) Anmeldetag: 10.08.2004
(51) Int. Cl.: H04Q 11/00

(54) **VERFAHREN ZUR ÜBERTRAGUNG VON DATENPAKETEN OHNE BURSTZUSAMMENFASSUNG**
METHOD FOR TRANSMITTING DATA PACKETS WITHOUT BURST ASSEMBLY
PROCEDE DE TRANSMISSION DE PAQUETS DE DONNEES SANS ASSEMBLAGE EN RAFALE

(30) Priorität: 25.08.2003 DE 10339039
(43) Veröffentlichungstag der Anmeldung: 24.05.2006
(73) Patentinhaber: Nokia Siemens Networks GmbH & Co. KG, 81541 München (DE)
(72) Erfinder: DE VEGA RODRIGO, Miguel, B-1200 Woluwe St. Lambert Brussels (BE)
(86) Internationale Anmeldenummer: PCT/EP2004/051756
(87) Internationale Veröffentlichungsnummer: WO 2005/022945

(56) Entgegenhaltungen:
- US-A1- 2002 109 878
- SAHARA A ET AL OPTICAL SOCIETY OF AMERICA / INSTITUTE OF ELECTRICAL AND ELECTRONICS ENGINEERS: "Demonstration of optical burst data switching using photonic, MPLS routers operated by GMPLS signaling" OPTICAL FIBER COMMUNICATION CONFERENCE. (OFC). POSTCONFERENCE DIGEST. ATLANTA, GA, MARCH 23 - 28, 2003, TRENDS IN OPTICS AND PHOTONICS SERIES. (TOPS), WASHINGTON, DC : OSA, US, Bd. TOPS. VOL. 86, 23. März 2003 (2003-03-23), Seiten 220-222, XP010681096 ISBN: 1-55752-746-6
- CHEYNS J ET AL: "ORION: a novel hybrid network concept: overspill routing in optical networks" TRANSPARENT OPTICAL NETWORKS, 2003. PROCEEDINGS OF 2003 5TH INTERNATIONAL CONFERENCE ON WARSAW, POLAND 29 JUNE-3 JULY 2003, PISCATAWAY, NJ, USA,IEEE, US, 29. Juni 2003 (2003-06-29), Seiten 144-147, XP010681414 ISBN: 0-7803-7816-4
- QIAO C: "LABELED OPTICAL BURST SWITCHING FOR IP-OVER-WDM INTEGRATION" IEEE COMMUNICATIONS MAGAZINE, IEEE SERVICE CENTER. PISCATAWAY, N.J, US, Bd. 38, Nr. 9, September 2000 (2000-09), Seiten 104-114, XP000975327 ISSN: 0163-6804

## Beschreibung

Die Erfindung betrifft ein Verfahren zur Übertragung von Datenpaketen zwischen Netzknoten eines optischen Netzes, bei dem zunächst ein Übertragungskanal reserviert wird, dann die Verbindung geschaltet wird und anschließend in Datenbursts, die jeweils mehrere Datenpakete enthalten, übertragen werden.

Bei der Datenübertragung über zukünftige optische Netze wird das sogenannte Optical Burst Switching OBS verwendet werden. Hierbei werden mehrere Datenpakete (beispielsweise IP-Pakete) zu sogenannten Datenbursts akkumuliert und dann über einen Datenkanal eines entsprechend konzipierten optischen Netzes gesendet. Der Datenkanal entspricht einer bestimmten Wellenlänge eines Wellenlängenmultiplexsignals (WDM/DWDM), das gleichzeitig mehrere optische Einzelsignale (Kanäle) über eine optische Faser überträgt. Über einen dieser Übertragungskanal können mehrere unterschiedliche Nachrichten übertragen, denen zugehörige Folgen von Bursts zugeordnet sind. Bei höherem Verkehrsaufkommen kommt es zu größeren Verzögerungen bei der Aussendung der Datenbursts, da weniger freie Zeitschlitze zur Übertragung der Bursts zur Verfügung stehen. Die Blockierungswahrscheinlichkeit wird durch ein "Two-way-Reservation-OBS-Network", 2WR-OBS, reduziert, bei dem ein Reservierungssignal ausgesendet wird und von einem empfangenen Netzknoten auch die Bestätigung erfolgt, siehe z.B. OFC 2003 Vol. 1, S 220-221 A. Sahara "Demonstration of Optical Burst Data Switching Using Photonic MPLS Routers Operated by GMPLS Signalling".

Bei dem sogenannten λ-Switching, bei dem mehrere Wellenlängen (Kanäle) eines WDM/DWDM-Systems zur Übertragung zur Verfügung stehen, ist die Schaltgranularität eine Wellenlänge. Folglich wird auch bei niedrigem Verkehrsaufkommen ein vollständiger Übertragungskanal belegt; man spricht von einer hohen "Wavelength Consumption". Keines dieser bekannten Verfahren ist optimal, wenn man die wesentlichen Kriterien Zeitverzögerung, Blockierungswahrscheinlichkeit und Nutzung des Übertragungskanals zugrunde legt.

Aufgabe der Erfindung ist es daher, ein verbessertes Verfahren zur Übertragung von Datenpaketen zwischen Netzknoten eines optischen Netzes anzugeben.

Diese Aufgabe wird durch ein Verfahren nach Anspruch 1 gelöst.

Vorteilhafte Weiterbildungen sind in den Unteransprüchen angegeben

Der entscheidende Vorteil bei diesem Verfahren ergibt sich durch den weiter bestehenden Übertragungskanal nach der Übertragung eines Datenbursts. Während dieser sogenannten Consecutive-Phase werden Datenpakete "on-the-fly" ohne oder mit einer minimalen Verzögerung übertragen, da sie nicht zuerst zu einem Burst zusammengefasst werden. Die freie Übertragungskapazität wird so lange genutzt bis der Datenkanal, wenn kein anderer Datenkanal bzw. keine andere Wellenlänge zur Verfügung steht, von einer anderen Verbindung zur Übertragung von deren zu Bursts zusammengefassten Datenpaketen benötigt wird.

Nur während der Consecutive-Phase kann die bestehende Verbindung zur Übertragung eines Datenbursts einer anderen Datenquelle unterbrochen werden.

Die vorteilhaften Funktionen der bekannten Burst Switching-Methoden können bei diesem System genutzt werden. So erfolgt die Reservierung einer Verbindung nach dem Two-way-Reservation-OBS-Prinzip, um die Blockierungswahrscheinlichkeit zu minimieren.

Ebenso kann das erfinderische Verfahren bei bidirektionalen Verbindungen angewendet werden, wobei dann eine Signalisierung des Verbindungsendes in der Consecutive-Phase an beide betroffenen Netzknoten erfolgt.

Die Erfindung wird anhand von Figuren näher erläutert.

Es zeigen
Figur 1 die Nutzung der Übertragungskapazität bei herkömmlichen "Optical Burst Switching" (OBS),
Figur 2 die Nutzung der Übertragungskapazität bei dem erfindungsgemäßen Verfahren,
Figur 3 ein Prinzipschaltbild eines optischen Netzes und
Figur 4 den Vergleich des erfinderischen Verfahrens mit herkömmlichen Verfahren.

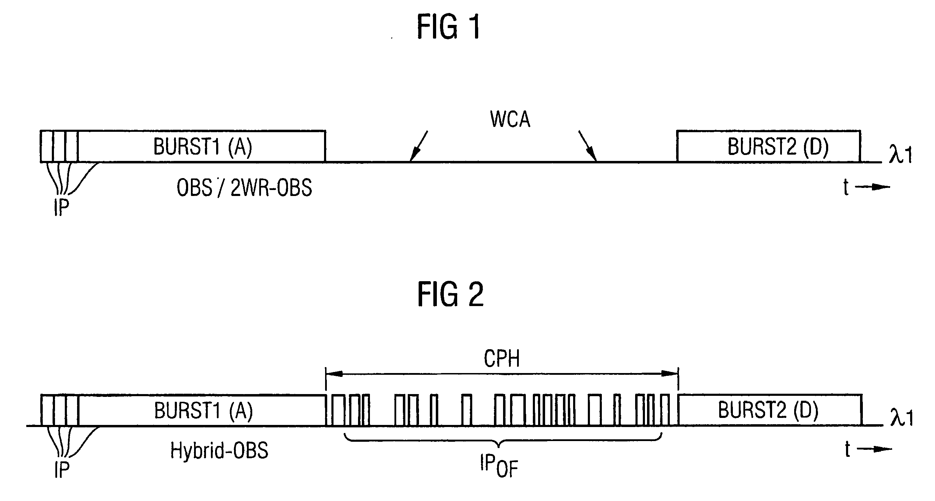

**Figur 1** zeigt die Übertragung von Datenbursts über einen Datenkanal λ1 einer bestimmten Wellenlänge. Zunächst wird ein Datenburst BURST1 übertragen, der mehrere Datenpakete beinhaltet (der Header wurde zuvor auf einer Wellenlänge in einem Service-Kanal übertragen). Nach der Beendigung des Bursts werden zunächst keine Daten übertragen, so dass Kanalkapazität WCA vergeudet wird. Erst anschließend wird ein zweiter Datenburst BURST2 einer zweiten Signalquelle über den selben Datenkanal λ1 (die selbe Wellenlänge) übertragen. Anhand von Figur 2 wird offensichtlich, dass nur ein Teil der Kanalkapazität genutzt wird.

**Figur 2** zeigt das erfinderische Verfahren. Nach der Übertragung des ersten Datenburst BURST1 der ersten Datenquelle, eines Netzknotens A, werden anschließend IP-Pakete vom selben Netzknoten über den Kanal gesendet, die aber nicht zu einem weiteren Burst akkumuliert werden. Erst wenn ein Burst BURST2 einer weiteren Datenquelle, eines Netzknotens (D), zur Übertragung ansteht, wird die Aussendung der Datenpakete IP_{OF} "on-the-fly" unterbrochen und der BURST2 übertragen. Wegen der Kombination der Burst- und der Datenpakete-Übertragung wird dies Verfahren als Hybrid-OBS oder "Adaptive Path Optical Network: APON"_bezeichnet.

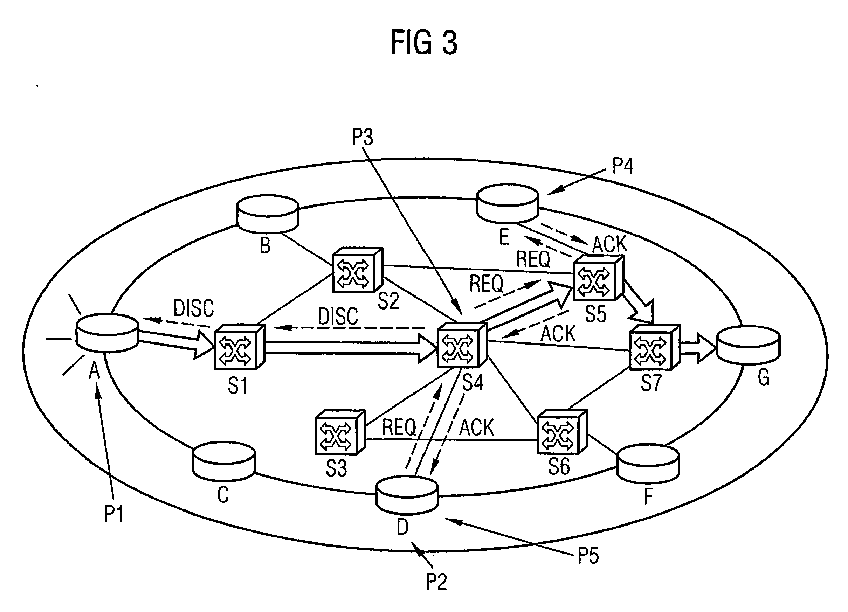

Anhand von **Figur 3** wird das Verfahren näher erläutert. In der Figur ist ein optisches Netz dargestellt, dass über optische Schalteinrichtungen S1 bis S7 verfügt sowie über Endknoten A bis G, die als Schnittstelle zum eigentlichen optischen Verkehrsnetz jeweils von verschiedenen Teilnehmern Datensignale empfangen, diese in Datenbursts umsetzen und über das optische Netz zu einem anderen Netzknoten senden, der das Datensignale oder unterschiedliche Datensignale wiederum den Teilnehmern zuführt. In der Gegenrichtung werden über das optischen Verkehrsnetz empfangene Datensignale an die Teilnehmer weitergeleitet.

Wir gehen von einer ersten Phase P1, der Consecutive-Phase, aus, bei der bereits der BURST1 ausgesendet wurde und die Datenpakete "on-the-fly" vom Endknoten A zum Endknoten G übertragen werden. Diese Phase hält so lange an, bis in einer zweiten Phase P2 beispielsweise der Endknoten D unter Nutzung eines Service-Kanals eine Anfrage REQ über die Schalteinrichtung S4 und die Schalteinrichtung S5 zum Endknoten E schickt, um eine Reservierung von Übertragungskapazität (eines Datenkanals) für seinen Datenburst BURST2 durchzuführen. Die Schalteinrichtung S4 empfängt diese Anfrage und, da kein anderer Datenkanal (keine andere Wellenlänge) frei ist, informiert den Endknoten A mittels eines Unterbrechungssignals DISC (Disconnect), dass die bestehende Verbindung unterbrochen wird. Der Endknoten E, dem D die Daten zusenden will, empfängt nun die Reservationsanfrage und sendet eine Bestätigung ACK (Acknowledgement) zurück zum Endknoten D. D empfängt diese Bestätigung und kann nun seinen Datenburst BURST2 aussenden. Die Darstellung in Figur 2 zeigt dieses "Multiplex-Burstsignal" auf der Verbindung zwischen den Schalteinrichtungen S4 und S5.

Eine Variante in Phase 3 besteht darin, das die Schalteinrichtung S4 das Bestätigungssignal des Endknotens E abwartet, der die "on-the-fly" gesendeten Datenpakete als freie Verbindung ansieht und deshalb trotzdem seine Bestätigung ACK ausendet. Erst dann wird von der Schalteinrichtung S4 das Unterbrechungssignal an den Netzknoten A gesendet.

Nach dem Herstellen der Verbindung D - E bleibt diese Verbindung jetzt für weitere Datenpakete von D bestehen, bis sie von einem der Endknoten, beispielsweise auch wieder vom Endknoten A, erneut unterbrochen wird.

Das Hybrid-OBS-Verfahren kann ebenfalls für bidirektionale Verbindungen verwendet werden. Die Unterbrechungssignale müssen dann an beide miteinander in Verbindung stehenden Netzknoten gesendet werden.

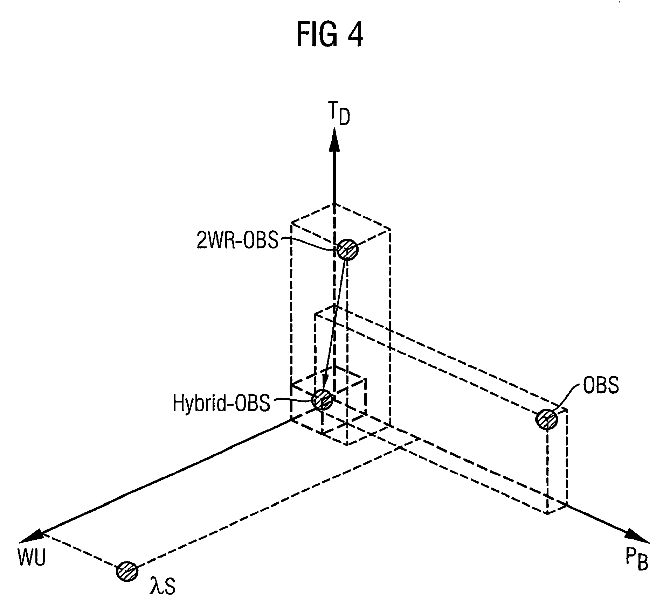

**Figur 4** zeigt die Eigenschaften des Hybrid-OBS und der bekannten Verfahren: A-switching λS, Optical Burst Switching OBS und Two-way-Reservation 2WR-OBS. Im Vergleich mit OBS und 2WR-OBS ist die Verzögerungszeit T_{D} bei der Aussendung eines Datenpakets niedrig. Gegenüber λ-Switching, bei dem ja stets eine komplette Wellenlänge und damit ein kompletten Übertragungskanal zur Verfügung steht, ist die Verzögerungszeit natürlich höher. Die Blockierungswahrscheinlichkeit P_{B} ist sehr niedrig, da das Hybrid-OBS ebenfalls mit Reservierung und Bestätigung arbeitet. Sie ist niedriger als bei beiden OBS-Verfahren, da nur eine geringere Anzahl von Bursts übertragen werden muss. Die Wavelength Consumption (Wellenlängennutzung) WU wird mit der des 2WR-OBS gleichgesetzt, da die Übertragung der IP-Datenpakete nicht berücksichtigt wird, denn die Consecutive-Phase wird vom System als freie Kapazität angesehen. Der Jitter ist wegen der geringen Wartezeiten insbesondere während der Consecutive-Phase sehr klein, auch wird während dieser Phase kein Signalisierungs-Overhead benötigt.

Zusammengefasst kann somit gesagt werden, dass das Hybrid-OBS gegenüber dem bisherigen Burst-Übertragungsverfahren wesentliche Vorteile bietet.

### Bezugszeichen

- λ1: Datenkanal
- BURST1: Datenburst einer ersten Verbindungsquelle
- IP_{OF}: Datenpaket "on the fly"
- BURST2: Datenburst einer zweiten Verbindungsquelle
- WCA: vergeudete Kanalkapazität
- REQ: Reservierungs-Anfrage
- ACK: Reservierungs-Bestätigung
- DISC: Unterbrechungssignal (Disconnect)
- S1-S7: Schalteinrichtung (Cross Connector)
- A-G: Netz-Endknoten
- BP: Blockierungswahrscheinlichkeit
- DE: Verzögerung
- WU: Wellenlängennutzung
- CPH: Consecutive Phase
- T_{D}: Verzögerungszeit (Delay Time)
- P_{B}: Blockierungswahrscheinlichkeit

## Patentansprüche

1. Verfahren zur Übertragung von Datenpaketen (IP) zwischen Netzknoten (A, G) eines optischen Netzes, bei dem zunächst die Übertragungskapazität eines Datenkanals (λ1) reserviert wird und anschließend zu einem Datenburst (BURST1) zusammengefasste Datenpakete (IP) übertragen werden,
**dadurch gekennzeichnet,**
**dass** nach der Übertragung des Datenbursts (BURST1) die Datenverbindung (A - G) über den Datenkanal (λ1) erhalten bleibt und während dieser Consecutive-Phase (CPH) weitere Datenpakete zwischen den Netzendknoten (A, G) ohne Burstzusammenfassung übertragen werden und
**dass** die Verbindung erst dann beendet wird, wenn der bestehende Datenkanal (λ1) zumindest abschnittsweise zur Übertragung eines Datenbursts (BURST2) einer anderen Verbindung (D - E) benötigt wird.

2. Verfahren nach Anspruch 1,
**dadurch gekennzeichnet,**
**dass** eine Anfrage (REQ) zur Reservierung von Übertragungskapazität / eines Datenkanals (λ1) von einem die Reservierung wünschenden Netzknoten (D) über Schalteinrichtungen (S4, S5) des optischen Netzes zu einem Endknoten (E) gesendet wird.

3. Verfahren nach Anspruch 2,
**dadurch gekennzeichnet,**
**dass** eine Reservierung von Übertragungskapazität / eines Datenkanals (λ1) für eine neue Verbindung (D - E) nur während der Consecutive-Phase (CPH) erfolgt.

4. Verfahren nach Anspruch 2 oder 3,
**dadurch gekennzeichnet,**
**dass** ein Unterbrechungssignal (DISC) über die im Verbindungsweg (A - G) liegenden Schalteinrichtungen (S4, S1) an den die gewünschte Verbindung in der Consecutive-Phase (CPH) zur Aussendung von Daten nutzenden Endknoten (A) erfolgt.

5. Verfahren nach Anspruch 2,
dass die Reservierung von Übertragungskapazität nach einem Two-way-Reservation-OBS-Prinzip durch Anfrage und Bestätigung erfolgt.

6. Verfahren nach Anspruch 5,
**dadurch gekennzeichnet,**
**dass** die Reservierung von Übertragungskapazität / Übertragunskanälen für bidirektionale Verbindungen erfolgt.

7. Verfahren nach Anspruch 6,
**dadurch gekennzeichnet,**
**dass** zur Reservierung von Übertragungskapazität für eine neue Verbindung (D - E) ein Unterbrechungssignal (DISC) an beide Netz-Endknoten (A,G) einer Verbindung (A - G) über die im Verbindungsweg (A - G) liegenden Schalteinrichtungen (S4, S5) gesendet wird.

8. Verfahren nach Anspruch 4 oder 7,
**dadurch gekennzeichnet,**
**dass** ein Unterbrechungssignal (DISC) erst dann gesendet wird, wenn eine Bestätigung (ACK) durch den eine Anfrage (REQ) zur Reservierung von Übertragungskapazität empfangenden Endknoten (E) erfolgt ist.

## Claims

1. Method for transmitting data packets (IP) between network nodes (A, G) of an optical network, in which initially the transmission capacity of a data channel (λ1) is reserved and then data packets (IP) assembled to form a data burst (BURST1) are transmitted,
**characterized**
**in that** after the transmission of the data burst (BURST1), the data connection (A - G) over the data channel (λ1) is maintained and during this consecutive phase (CPH), further data packets are transmitted between the network terminating nodes (A, G) without burst assembly and
**in that** the connection is terminated only when the existing data channel (λ1) is needed for transmitting a data burst (BURST2) of another connection (D - E), at least in sections.

2. Method according to Claim 1,
**characterized**
**in that** a request (REQ) for the reservation of transmission capacity/of a data channel (λ1) is sent by a network node (D) wishing the reservation to a terminating node (E) via switching devices (S4, S5) of the optical network.

3. Method according to Claim 2,
**characterized**
**in that** transmission capacity/a data channel (λ1) was reserved for a new connection (D - E) only during the consecutive phase (CPH).

4. Method according to Claim 2 or 3,
**characterized**
**in that** a disconnect signal (DISC) is sent via the switching devices (S4, S1) located on the connection path (A - G) to the terminating node (A) utilizing the desired connection for sending out data in the consecutive phase (CPH).

5. Method according to Claim 2,
**characterized**
**in that** transmission capacity is reserved in accordance with a two-way reservation OBS principle by request and acknowledgement.

6. Method according to Claim 5,
**characterized**
**in that** transmission capacity/transmission channels are reserved for bidirectional connections.

7. Method according to Claim 6,
**characterized**
**in that** for reserving transmission capacity for a new connection (D - E), a disconnect signal (DISC) is sent to both network terminating nodes (A, G) of a connection (A-G) via the switching devices (S4, S5) located on the transmission path (A - G).

8. Method according to Claim 4 or 7,
**characterized**
**in that** a disconnect signal (DISC) is only sent when there has been an acknowledgement (ACK) by the terminating node (E) receiving a request (REQ) for reserving transmission capacity.

## Revendications

1. Procédé de transmission de paquets de données (IP) entre des noeuds de réseau (A, G) d'un réseau optique, dans lequel, en premier lieu, la capacité de transmission d'un canal de données (λ1) est réservée et, ensuite, des paquets de données (IP) regroupés en une rafale de données (BURST1) sont transmis,
**caractérisé en ce**
**qu'**après la transmission de la rafale de données (BURST1), la liaison de données (A - G) reste conservée par l'intermédiaire du canal de données (λ1) et en ce que pendant cette phase consécutive (CPH), d'autres paquets de données sont transmis entre les noeuds terminaux de réseau (A, G) sans regroupement, et
en ce que la liaison n'est terminée que lorsque le canal de données existant (λ1) est nécessaire, au moins par sections, pour la transmission d'une rafale de données (BURST2) d'une autre liaison (D - E).

2. Procédé selon la revendication 1,
**caractérisé en ce**
**qu'**une demande (REQ) pour la réservation de capacité de transmission / d'un canal de données (λ1) est émise par un noeud de réseau (D) souhaitant la réservation vers un noeud terminal (E), par l'intermédiaire de dispositifs de commutation (S4, S5) du réseau optique.

3. Procédé selon la revendication 2,
**caractérisé en ce**
**qu'**une réservation de capacité de transmission / d'un canal de données (λ1) pour une nouvelle liaison (D - E) est réalisée seulement pendant la phase consécutive (CPH).

4. Procédé selon la revendication 2 ou 3,
**caractérisé en ce**
**que** par l'intermédiaire des dispositifs de commutation (S4, S1) se trouvant dans la voie de liaison (A - G), un signal d'interruption (DISC) est réalisé au noeud terminal (A) utilisant la liaison souhaitée dans la phase consécutive (CPH) pour l'émission de données.

5. Procédé selon la revendication 2,
**caractérisé en ce**
**que** la réservation de capacité de transmission est réalisée selon un principe de Two-Way-Reservation-OBS par demande et confirmation.

6. Procédé selon la revendication 5,
**caractérisé en ce**
**que** la réservation de capacité de transmission /canaux de transmission est réalisée pour des liaisons bidirectionnelles.

7. Procédé selon la revendication 6,
**caractérisé en ce**
**que** pour la réservation de capacité de transmission pour une nouvelle liaison (D - E), un signal d'interruption (DISC) est émis aux deux noeuds terminaux de réseau (A, G) d'une liaison (A - G) par l'intermédiaire de dispositifs de commutation (S4, S5) se trouvant dans la voie de liaison (A - G).

8. Procédé selon la revendication 4 ou 7,
**caractérisé en ce**
**qu'**un signal d'interruption (DISC) est seulement émis lorsqu'une confirmation (ACK) est réalisée par le noeud terminal (E) recevant une demande (REQ) pour la réservation de capacité de transmission.
